Europäisches Patentamt

(19) European Patent Office

Office européen des brevets

(11) Publication number: **0 114 862**
**B1**

(12) **EUROPEAN PATENT SPECIFICATION**

(45) Date of publication of patent specification: **01.04.87**

(21) Application number: **83902453.6**

(22) Date of filing: **01.08.83**

(86) International application number:
**PCT/NO83/00030**

(87) International publication number:
**WO 84/00469 16.02.84 Gazette 84/05**

(51) Int. Cl.⁴: **A 01 K 83/00, A 01 K 97/00**

(54) **AN APPARATUS FOR THE RELEASE OF A FISH HOOK FROM A SNOOD HEAD.**

(30) Priority: **03.08.82 NO 822650**

(43) Date of publication of application:
**08.08.84 Bulletin 84/32**

(45) Publication of the grant of the patent:
**01.04.87 Bulletin 87/14**

(84) Designated Contracting States:
**DE FR GB**

(56) References cited:
**NO-B- 146 935**

(73) Proprietor: **BJÖRSHOL, Kolbjörn**
**N-6560 Langöyneset (NO)**

(72) Inventor: **BJÖRSHOL, Kolbjörn**
**N-6560 Langöyneset (NO)**

(74) Representative: **Warren, Keith Stanley et al**
**BARON & WARREN 18 South End Kensington**
**London W8 5BU (GB)**

Courier Press, Leamington Spa, England.

EP 0 114 862 B1

## Description

The present invention relates to an apparatus for releasing a fish hook which is connected to its snood through a head of the type which has a transverse opening housing a generally U-shaped leaf spring which is movable in the opening in the longitudinal direction of the head and the arms of which are adapted to engage an annular face on the leg of a fish hook and to be spread apart by engagement with cooperating oblique surfaces in the opening so as to release the fish hook leg and, hence, the fish hook. Such a snood head is described in my patent specification NO—B—146,935. For the purposes of moving the leaf spring in the longitudinal direction of the head so as to spread the leaf spring arms and release the fish hook leg from engagement with the leaf spring, the part of the spring which interconnects the two arms is provided with projections which can be activated from outside the head. An object of the present invention is to provide an apparatus which, in a simple and secure manner, can be used to perform such external activation of the leaf spring relatively to the head proper.

According to the present invention, the apparatus comprises a housing mounted for reciprocable movement, said housing having a cavity, which transversely to the direction of movement of the housing has a section corresponding to the cross-section of a snood head, and a conical entry portion, radial and oblique wire springs arranged about the entry portion and having ends projecting into the cavity for engaging the leaf spring of a snood head located in the cavity, and a cock arranged to project into the cavity to engage the snood head, said cock being pivotably mounted in the housing and being provided with a caster which cooperates with a stationary cam upon movement of the housing to pivot the cock so as to cause the snood head to move relatively to the leaf spring and thereby spread apart the spring arms and release the fish hook leg.

In order that the invention may be more readily understood, reference will now be made to the accompanying drawings, in which:—

Figures 1a, 1b and 1c are elevational views of a snood head which can be used with an apparatus according to the invention, Figures 1a and 1b being views of the head as seen in mutually perpendicular directions with a hook leg in the locked position, and Figure 1c being a view similar to that of Figure 1a with the leaf spring in the release position for the hook leg.

Figure 2 is an end view of the apparatus according to the invention,

Figure 3 is a side view of the apparatus,

Figure 4 is a fragmentary side view of the apparatus, partly in longitudinal section and to a larger scale than Figures 2 and 3,

Figure 5 is a side view similar to Figure 3, but at a later time during the release of a hook,

Figure 6 is a fragmentary view, partly in section, and similar to Figure 4, and

Figure 7 is a side view similar to Figures 3 and 5 and after release of the fish hook.

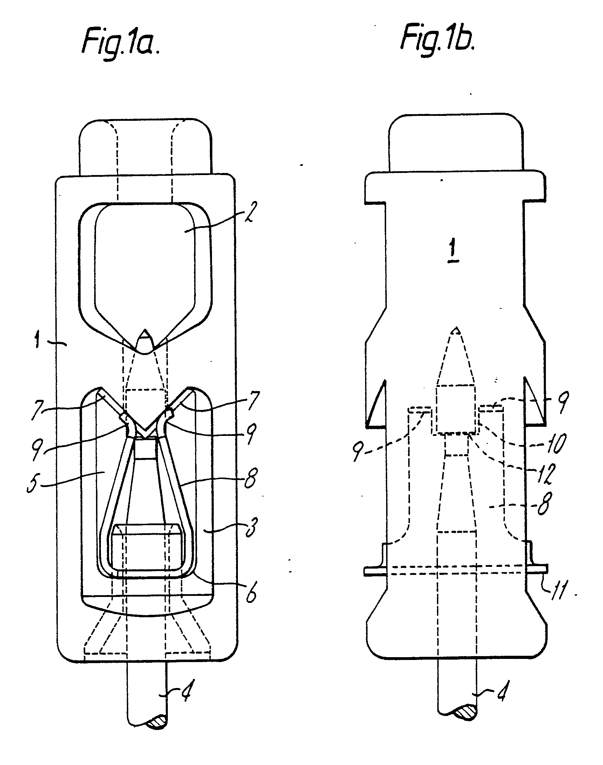

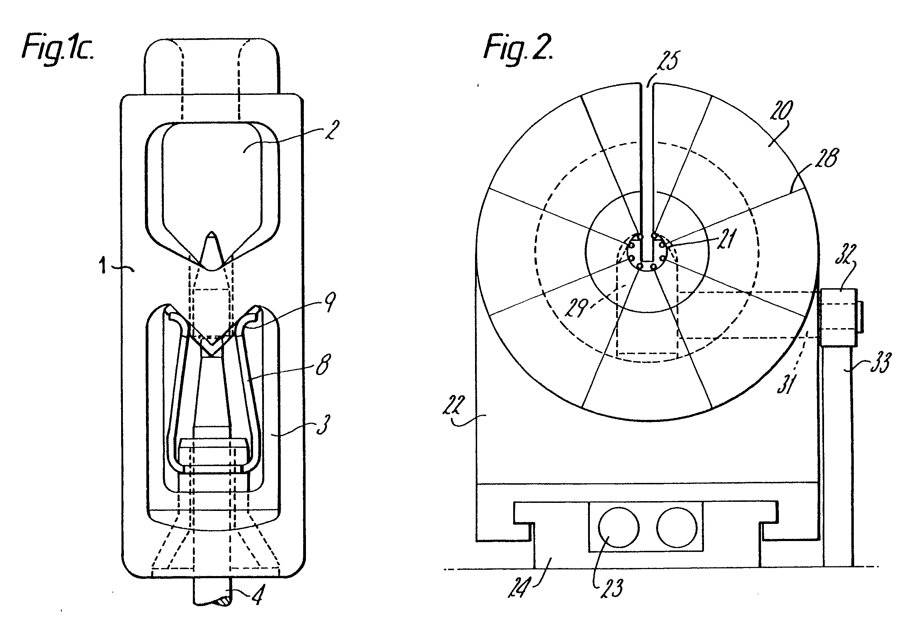

A snood head which is particularly suited for treatment in an apparatus according to the invention is illustrated in Figures 1a, 1b and 1c. It comprises an elongated member 1 which is preferably made of plastic material having a circular or rectangular section, and at one end is provided with an eye 2 adapted to receive and secure a snood. At the opposite end of the head there is a longitudinally extending cavity 3 which is adapted for introduction, receiving and removal of the leg 4 of a fish hook. Along its length the cavity 3 is extended into a transverse opening 5 which, at the end facing the introduction end of the cavity 3, has a plane surface 6 and at the opposite end has two oblique surfaces 7. Each of the surfaces 7 is, in the transverse direction, split in two, whereby the cavity 3 is extended so as to form a projection. In the transverse opening 5 a generally U-shaped leaf spring 8 is housed, the bottom portion of which is provided with an aperture corresponding to the cavity 3 and engages the surface 6, while each of the free ends 9 of the spring arms is provided with a recess 10 corresponding to the projection referred to, each of the arms being bent for engagement with its cooperating oblique surface 7.

The bottom portion of the leaf spring 8 is made with projections 11 which extend outwardly to the periphery of the housing 5, so that the spring may be displaced longitudinally of the housing by activation of the projections 11.

This snood head is intended for cooperation with a fish hook, the leg of which is made with a thin portion so as to form an annular surface 12, perpendicular to the direction of the leg 4. This surface is to engage the bottom of each of the recesses 10 in the leaf spring ends 9 so that the hook leg is secured when introduced through the cavity 3.

When the hook leg is to be released from the head 1, the leaf spring 8 is moved forwardly by means of the projections 11, so that each of the bent ends 9 of the leaf spring 8 engages its cooperating oblique surface 7, whereby the spring ends are spread and the recesses 10 disengage the annular surface 12 and the hook leg 4 may be withdrawn from the head.

A snood head as described above and illustrated in Figures 1a, 1b and 1c forms no part of the present invention, which relates to an apparatus for actuation of the projections 11 for the release of the connection between the snood head 1 and a fish hook leg 4.

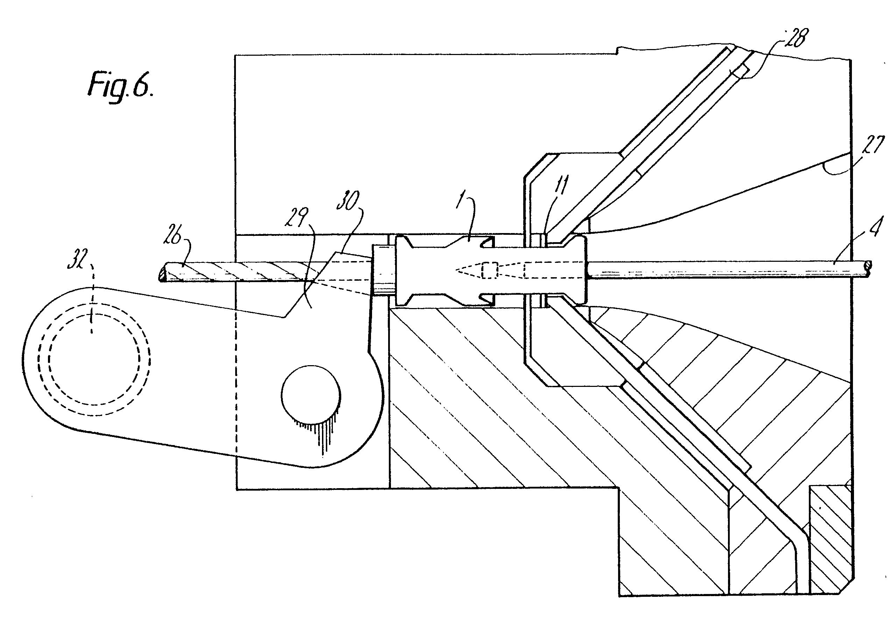

Such an apparatus and the operation of the same will appear from the following description with reference to Figures 2 to 7.

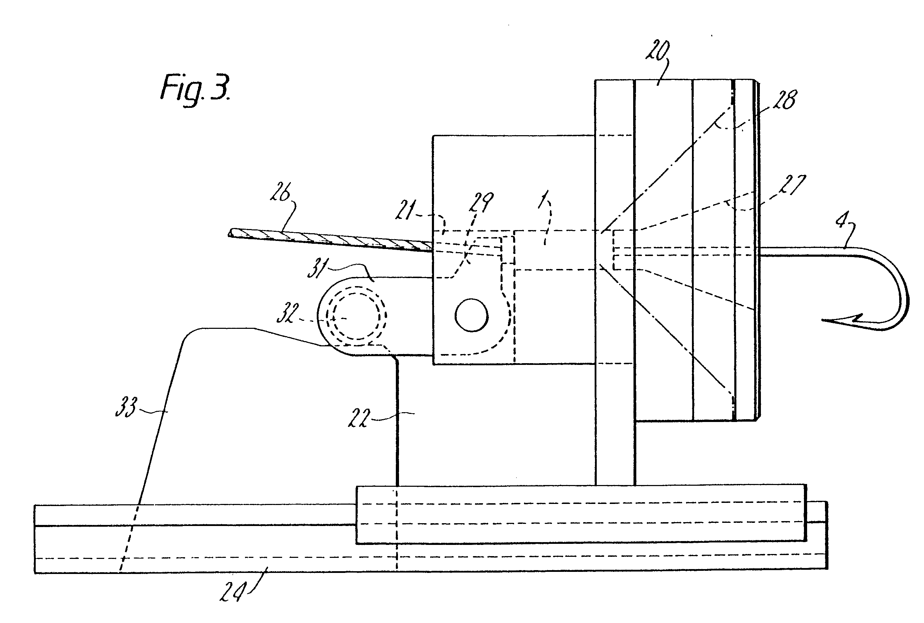

As shown in Figures 2 to 7, the apparatus comprises a housing 20 which is made with a longitudinally extending cavity 21 with a cross-section which corresponds to the cross-section of a snood head 1. The housing 20 is supported by a foot 22 which constitutes one part of a sliding guide, the foot 22 being subjected to the action of springs 23 which tend to urge the foot 22 with the housing to the right in Figure 3 along the guide 24. The housing is made with a radial slot 25 outwardly from the cavity 21, so that a snood head 1 with its snood 26 may be entered into the cavity 21 with a fish hook 4 introduced in the head 1.

The cavity ends at the entry side in a conical surface or portion 27 for the purpose of facilitating the introduction of the snood head. Furthermore, a number of wire springs 28 are arranged to extend obliquely inwardly towards the cavity 21 and project into the same, so that their inner ends 281 may engage the projections 11 on the U-shaped leaf spring 8 in a snood head 1 when this is introduced into the cavity 21 in the apparatus. The number of wire springs 28 is such that engagement between at least two springs 28 and the projections 11 is always obtained, independently of the orientation of the head 1 in the cavity 21.

The cock 29 is also arranged in the housing 20, the point 30 of the cock extending radially into the cavity 21. The point 30 is slotted in correspondence with the slot 25 so as to pass a snood 26. The cock 29 is provided with a tail 31 at the end of which a caster 32 is supported, the caster being adapted to cooperate with a stationary cam 33, the profile of which decides the angular position of the cock 29.

The operation of the apparatus will now be described with reference to the Figures 3 to 7.

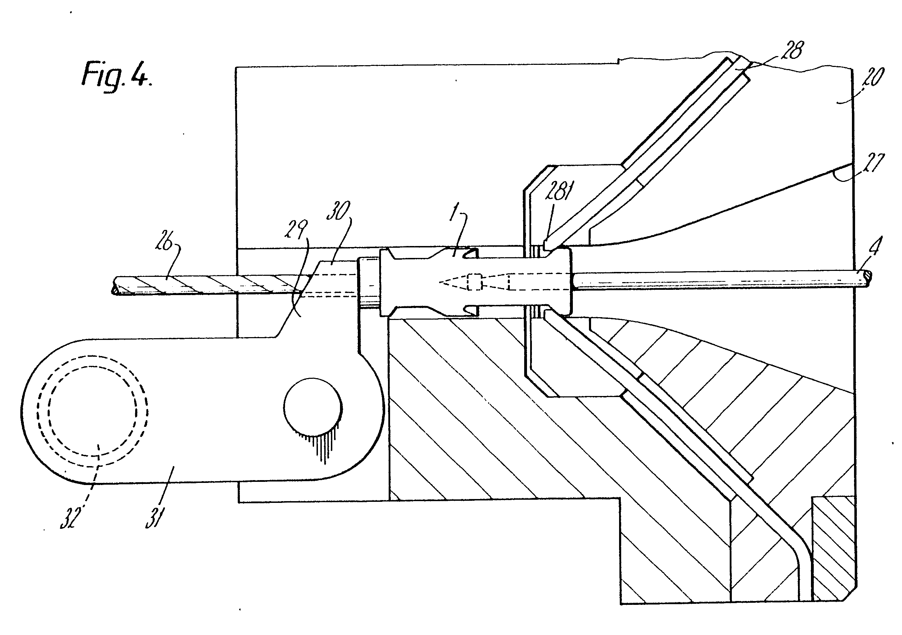

As shown in Figure 3, a snood head 1 with entered hook leg 4 and snood 26 is placed in the cavity 21 with the snood end of the head in engagement with the cock point 30. The housing 20 is urged by means of the springs 23 to its end position on the guide 24. In this position of the housing 21, the caster 32 is engaging the beginning of the cam 33. The hook leg 4 is locked by means of the U-spring 8, as shown in Figure 1a. As shown in Figure 4, at least two of the wire springs 28 extend underneath the projections 11 on the U-shaped spring 8.

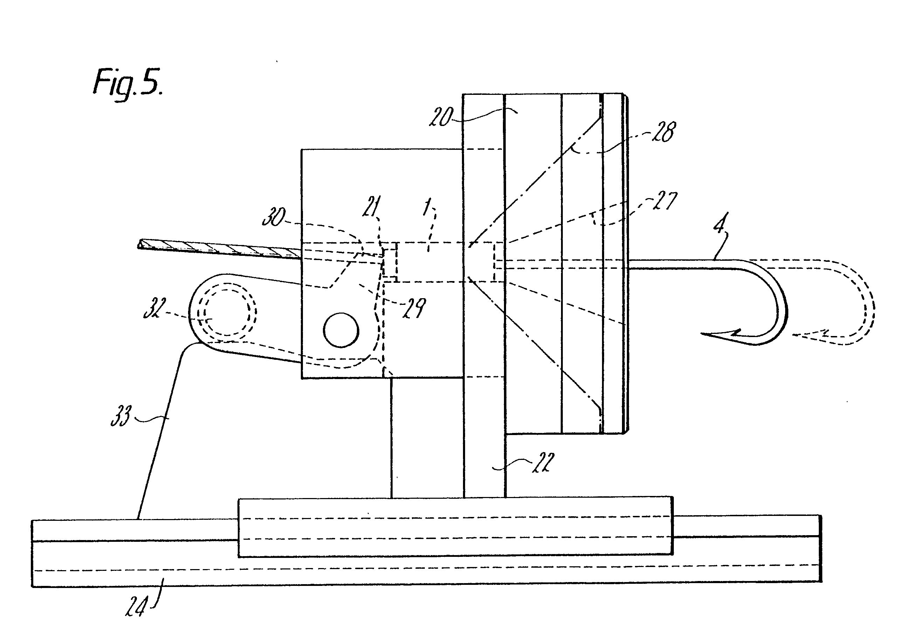

In order to release the hook 4, a pull is exerted to the left on the snood 26. When this pull exceeds the force of the springs 23, the housing 20 with the snood head 1 is pulled to the left, the caster 32 is moved upwardly along the face of the cam 33 and the cock point 33 is rotated to the position shown in Figure 5, which means that the snood head 1 is displaced to the right relatively to the housing 20. The wire springs 28 abut against the projections 11 so that the U-spring 8 is locked relatively to the housing 20 while the head 1 is moved to the right. Consequently, the bent ends 9 of the U-spring 8 slide along the oblique surfaces 7 in the head and are thereby forced to spread so that the engagement with the annular surface 12 on the hook leg 4 is released, as shown in Figure 1c, and the hook 4 may be pulled outwardly to the right in Figure 5.

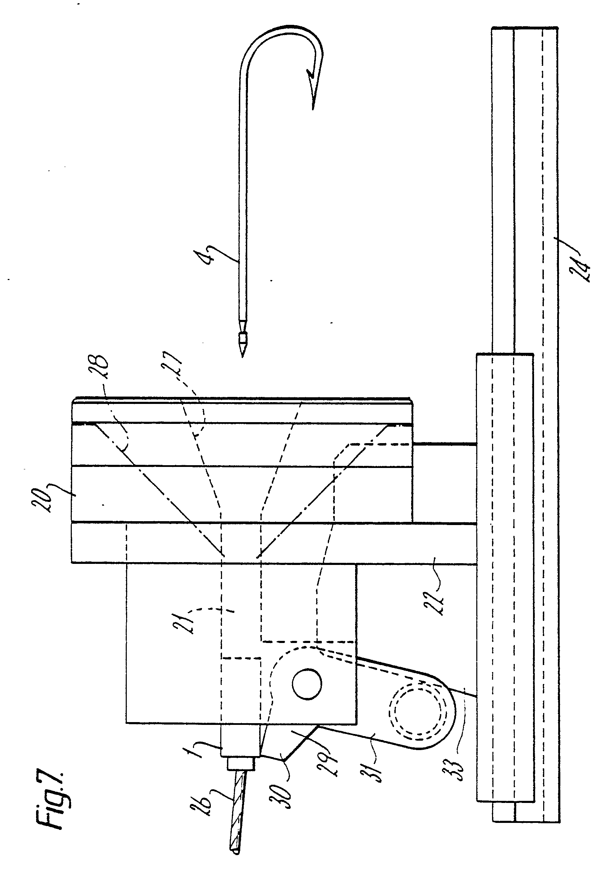

When further pull is applied to the snood 26, the head 1 pushes the cock 29 over into the position shown in Figure 7 with the caster 32 carried downwardly along an approximately vertical edge of the cam 33. As a result, the cock is rotated out of the cavity 21 so that the head 1 may be pulled out of the apparatus. The springs 23 are then no longer subjected to the pull on the snood 26 and, consequently, return the housing 20 to its initial position.

## Claims

1. An apparatus for releasing a fish hook from a snood head (1) of the type which has a transverse opening (3) housing a generally U-shaped leaf spring (8) which is movable in the opening in the longitudinal direction of the head and the arms (9) of which are adapted to engage an annular face (12) on the leg of a fish hook (4) and to be spread apart by engagement with cooperating oblique surfaces (7) in the opening so as to release the fish hook leg, characterised in that the apparatus comprises a housing (20) mounted for reciprocable movement, said housing having a cavity (21) which transversely to the direction of movement of the housing has a section corresponding to the cross-section of a snood head (1), and a conical entry portion (27), radial and oblique wire springs (28) arranged about the entry portion and having ends (281) projecting into the cavity (21) for engaging the leaf spring (8) of a snood head located in the cavity, and a cock (29) arranged to project into the cavity (21) to engage the snood head, said cock being pivotably mounted in the housing (20) and being provided with a caster (32) which cooperates with a stationary cam (33) upon movement of the housing to pivot the cock so as to cause the snood head to move relatively to the leaf spring and thereby spread apart the spring arms and release the fish hook leg.

2. An apparatus as claimed in claim 1, characterised in that the housing (20) is reciprocably mounted on slide means (24) and is movable against the action of spring means (23).

## Patentansprüche

1. Vorrichtung zum Lösen eines Fischhakens von einem Vorfachkopf (1) der Ausführungsform, die eine Queröffnung (3) aufweist, in der eine generell U-förmige Blattfeder (8) untergebracht ist, welche in der Öffnung in Längsrichtung des Kopfes bewegbar ist und deren Arme (9) für den Eingriff mit einer ringförmigen Fläche (12) des Schenkels eines Fischhakens (9) ausgebildet sind, und die zum Lösen des Fischhakenschenkels durch den Eingriff mit den damit zusammenwirkenden Flächen (7) in der Öffnung gespreizt wird, dadurch gekennzeichnet, daß die Vorrichtung aus einem hin- und herbeweglich angeordneten Gehäuse (20) besteht, das Gehäuse mit einer Ausnehmung (21), die quer zur Bewegungsrichtung des Gehäuses eine dem Querschnitt des Vorfachkopfes (1) entsprechende Sektion aufweist, einem konischen Eintrittsbereich (27), radial und schräg dazu um den Eintrittsbereich angeordneten Drahtfedern (28), deren Enden (281) in die Ausnehmung (21) für den Eingriff mit der Blattfeder (8) des in der Ausnehmung liegenden Vorfachkopfes ragen, und einem Hahn (29) in einer für den Eingriff mit den Vorfachkopf in die Ausnehmung (21) ragenden Anordnung, wobei der Hahn im Gehäuse (20) schwenkbar gelagert ist und eine schwenkbare Rolle (32) aufweist, die mit einer stationären Nockenbahn (33) bei der Bewegung des Gehäuses zum Verschwenken des Hahnes derart zusammenwirkt, daß der Vorfachkopf relaiv zur Blattfeder bewegt wird und dabei die Arme der Feder spreit und den Schenkel des Fischhakens vom Vorfachkopf löst.

2. Vorrichtung nach Anspruch 1, dadurch gekennzeichnet, daß das Gehäuse (20) hin- und herbeweglich auf einer Schlitten-Anordnung (24) aufgebaut und gegen die Kraft einer Feder-Anordnung (23) beweglich ist.

## Revendications

1. Appareil pour libérer un hameçon d'une tête de cordée (1) du type comportant un boîtier ayant une ouverture transversale et contenant un ressort à lames (8) en forme générale de U qui est mobile dans l'ouverture dans une direction longitudinale par rapport à la tête et dont les bras (9) sont prévus pour entrer en contact avec une face annulaire (12) d'une jambe de hameçon (4) et en être écartés par mise en prise avec des surfaces (7) obliques coopérantes situées dans l'ouverture de façon à libérer la jambe de l'hameçon, caractérisé en ce que l'appareil comporte un boîtier (20) susceptible d'un mouvement de va-et-vient, ledit boîtier ayant une cavité (21) qui dans une direction transversale par rapport au mouvement du boîtier a une section correspondant à la section transversale d'une tête de cordée (1), et une partie formant entrée conique (27), des ressorts métalliques (28) radiaux et obliques disposés autour de la partie formant entrée et comportant des extrémités (281) faisant saillie dans la cavité (21) pour entrer en contact avec le ressort à lames (28) d'une tête de cordée située dans la cavité, et un chien (29) prévu pour faire saillie dans la cavité (21) pour entrer en contact avec la tête de cordée, ledit chien étant monté rotatif sur ce boîtier (20) et comportant une roulette (32) qui coopère avec une came fixe (33) lors du mouvement du boîtier, pour faire pivoter la chien de façon à entraîner un mouvement de la tête de cordée par rapport au ressort à lames et écarter ainsi les bras du ressort et libérer la jambe de l'hameçon.

2. Appareil selon la revendication 1, caractérisé en ce que le boîtier (20) est monté sur des moyens de coulissement (24) de manière à avoir un mouvement de va-et-vient et qu'il est mobile à l'encontre de l'action de moyens formant ressort (23).

*Fig.1a.*

*Fig.1b.*

Fig. 1c.

Fig. 2.

0 114 862

Fig. 3.

Fig. 4.

0 114 862

Fig.5.

0 114 862

Fig.6.

0 114 862

*Fig.7.*

0 114 862